# EUROPEAN PATENT APPLICATION

(11) **EP 4 650 418 A1**
(43) Date of publication of application: **19.11.2025**
(21) Application number: 24741590.4
(22) Date of filing: 12.01.2024
(51) Int. Cl.: C10L 10/00, C09K 21/06, C09K 21/14, C10L 9/10

(54) **METHOD FOR SUPPRESSING SPONTANEOUS HEAT GENERATION IN SOLID CARBON RESOURCES, AND SOLID CARBON RESOURCE STORING METHOD USING SAME**

(30) Priority: 12.01.2023 JP 2023002772
(71) Applicant: NIPPON STEEL CORPORATION, Chiyoda-ku Tokyo 100-8071 (JP)
(72) Inventor: KAWAI Akari, Tokyo 100-8071 (JP); HATA Yuki, Tokyo 100-8071 (JP)
(74) Representative: Vossius & Partner Patentanwälte Rechtsanwälte mbB
(86) International application number: PCT/JP2024/000610
(87) International publication number: WO 2024/150818

(57) **Abstract**

The inhibition method of spontaneous heat generation in solid carbon resources includes adding a petroleum-based additive to solid carbon resources as a spontaneous heat generation inhibitor.

## Description

### TECHNICAL FIELD

The present invention relates to an inhibition method of spontaneous heat generation in solid carbon resources and storage method for solid carbon resources using the same.

Priority is claimed on Japanese Patent Application No. 2023-2772, filed January 12, 2023, the content of which is incorporated herein by reference.

### BACKGROUND ART

Solid carbon resources, such as coal and biomass charcoal of which the use is expected to expand in the future, may be stacked and stored in a large amount in a yard or the like. Here, since the solid carbon resources spontaneously generate heat, it is necessary to carefully manage the temperature of the solid carbon resources.

Several techniques have been proposed to inhibit the spontaneous heat generation in such solid carbon resources. For example, Patent Document 1 discloses a method for inhibiting a temperature rise and spontaneous heat generation by reducing the amount of radicals, which are generated due to a reaction between carbonaceous powder and oxygen, using a temperature rise/spontaneous ignition inhibitor that contains at least one substance selected from a radical scavenger and an oxygen scavenger, and the temperature rise/spontaneous ignition inhibitor may contain a nonionic surfactant.

Further, Patent Document 2 discloses a method for manufacturing modified coal of which spontaneous ignition is inhibited by drying coal in an atmosphere containing a radical scavenger made of an organic compound including a hydroxyl group such as alcohol or phenol.

Furthermore, Patent Document 3 discloses a stabilization method for simultaneously performing dehydration and prevention of spontaneous ignition by performing heat treatment on coal at a temperature of 100°C to 350°C until the moisture content of the coal reaches substantially 0 wt%, and then performing an oxidation treatment.

### Citation List

### Patent Documents

Patent Document 1: Japanese Unexamined Patent Application, First Publication No. 2001-164254
Patent Document 2: Japanese Unexamined Patent Application, First Publication No. 2011-201947
Patent Document 3: Japanese Unexamined Patent Application, First Publication No. S59-074189

### SUMMARY OF INVENTION

### Technical Problem

However, since a large amount of a specific compound needs to be used in the method disclosed in Patent Document 1, there is a problem in terms of cost. For example, in a case where a substantial amount of a nonionic surfactant is added to carbonaceous powder, which is to be industrially used in a large amount, as a heat generation inhibitor, there is a high possibility that manufacturing cost will be further increased. Further, in the method disclosed in Patent Document 2, it is also difficult to add an organic compound including a substantial amount of hydroxyl groups in terms of cost.

In Patent Document 3, coal is subjected to dehydration and then subjected to oxidation treatment to inhibit the heat generation. However, an effect of the oxidation treatment in a case where dehydration treatment is not required is unclear.

As described above, in the methods in the related art, further improvement was required in terms of cost or the simplicity of the process.

The present invention has been made in view of the above-described problems, and an object of the present invention is to provide an inhibition method of spontaneous heat generation in solid carbon resources, which is inexpensive and simple, and a storage method for solid carbon resources using the same.

### Solution to Problem

(1) An inhibition method of spontaneous heat generation in solid carbon resources, the method including:
   adding a petroleum-based additive to solid carbon resources as a spontaneous heat generation inhibitor.
(2) The inhibition method of spontaneous heat generation in solid carbon resources according to (1),
   in which the petroleum-based additive is added to the solid carbon resources in an amount of 1 mass% or more.
(3) The inhibition method of spontaneous heat generation in solid carbon resources according to (1) or (2), further including:
   performing heat treatment on the solid carbon resources to which the petroleum-based additive is added in an inert gas atmosphere at a temperature of 20°C or more for 1 hour or more.
(4) A storage method for solid carbon resources for storing solid carbon resources treated by the method according to any one of (1) to (3).

### Advantageous Effects of Invention

According to the present invention, since a process of adding a petroleum-based additive to the solid carbon resources is provided, the spontaneous heat generation properties of the solid carbon resources can be simply reduced at low cost.

### BRIEF DESCRIPTION OF DRAWINGS

[FIG. 1] A graph showing corrected temperature rising curves of Test Nos. 1 to 4 (Comparative Example 1 and Invention Examples 1 to 3).
[FIG. 2] A graph in which values of delay times of T200 calculated from the corrected temperature rising curves of Test Nos. 1 to 4 (Comparative Example 1 and Invention Examples 1 to 3) are compared with each other.
[FIG. 3] A graph showing corrected temperature rising curves of Test No. 4 of Example 1 (Invention Example 3) and Test Nos. 5 to 8 of Example 2 (Invention Examples 4 to 7).
[FIG. 4] A graph in which values of delay times of T200 calculated from the corrected temperature rising curves of Test No. 4 of Example 1 (Invention Example 3) and Test Nos. 5 to 7 of Example 2 (Invention Examples 4 to 6) are compared with each other.

### DESCRIPTION OF EMBODIMENTS

The present inventors have conducted intensive studies to solve the above-described problems and repeated tests focusing on petroleum-based additives, so that the present invention has been devised.

A preferred embodiment of the present invention will be described in detail below with reference to the drawings.

In the present specification, the solid carbon resources are not particularly limited as long as being a solid material containing carbon as a main component. For example, the solid carbon resources may be a raw material used to manufacture coke and a charcoal material used as a fuel or a temperature raising agent in power generation, a converter, or the like. Examples of the charcoal material include fossil resources (coal such as anthracite, bituminous coal, sub-bituminous coal, brown coal, and peat) and organic resources derived from living organisms (biomass itself, biomass charcoal manufactured by heat treatment using biomass as a material (carbonized or semi-carbonized biomass such as charcoal and black pellets)). Further, in the present specification, petroleum heavy oil is a heavy component obtained from the refining of petroleum or crude oil having high viscosity and high specific gravity, petroleum tar is a sticky black to brown oily substance that is generated from thermal decomposition of petroleum or a substance derived from petroleum, and petroleum pitch is a residue that is obtained after petroleum, gas oil, or the like is refined from crude oil or a residue that is obtained from the vacuum distillation of petroleum. Furthermore, the petroleum heavy oil is liquid at room temperature (20°C), and petroleum tar and petroleum pitch are solid at room temperature (20°C).

A petroleum-based additive is formed of at least one or more of petroleum heavy oil, petroleum tar, and petroleum pitch. The petroleum-based additive is an additive derived from petroleum and is a petroleum additive.

The petroleum-based additive is preferably formed of at least one or more of petroleum tar and petroleum pitch, more preferably formed of at least one or more of petroleum heavy oil and petroleum pitch, and still more preferably formed of petroleum pitch.

The present invention provides an inhibition method of spontaneous heat generation in solid carbon resources that includes a process of adding a petroleum-based additive to solid carbon resources, and a storage method for solid carbon resources for storing solid carbon resources treated by this method. The petroleum-based additive has been industrially used as a binder for coal in the related art in a case where coal is used as a raw material to manufacture coke. Specifically, the binder is used as a binder that exhibits a caking property at a high temperature (350°C to 550°C) to complement the caking property of coal (non-caking coal and the like) having low expansibility. However, the present inventors have newly found that the petroleum-based additive has an action of inhibiting the spontaneous heat generation properties of the solid carbon resources in a case where the petroleum-based additive is added and mixed to the solid carbon resources. That is, in the present invention, the petroleum-based additive is used as an additive for inhibiting the spontaneous heat generation (spontaneous heat generation inhibitor).

For example, a ship loading process, a coal storage process (a yard or the like), a coal blending process, a pulverizing process, a forming process, and a coke oven charging process are performed in this order in a flow of a coke manufacturing process in a pig iron making process in the steel industry, and the petroleum-based additive as a binder is added to coal with which a predetermined amount of raw material coal is blended in the coal blending process after the coal blending process (see Japanese Unexamined Patent Application, First Publication No. 2014-70125, Japanese Unexamined Patent Application, First Publication No. 2008-120973, and the like). In contrast, in the pig iron making process in the steel industry, in a case where the petroleum-based additive is used as a spontaneous heat generation inhibitor as in the present invention, it is preferable that the petroleum-based additive is added in any stage from the ship loading process to the coal blending process (including a carrying-in process or a carrying process between the above-described processes from the ship loading process to the coal blending process). More preferably, the petroleum-based additive is added in either or both of a stage after the ship loading process and before the coal storage process (for example, a stage until coal (raw material coal) is unloaded from a ship and carried into a coal storage place such as a yard) and a stage after the coal storage process and before the coal blending process (for example, a stage until coal is carried from the coal storage place to a coal blending place). In a case where the petroleum-based additive is used as a spontaneous heat generation inhibitor, an effect of the petroleum-based additive can be obtained even though the petroleum-based additive is added in any stage before the coke oven charging process. However, in a case where the petroleum-based additive is added on the upstream side of a process flow, the possibility of spontaneous ignition on the downstream side can be inhibited. In a case where the petroleum-based additive is used as a spontaneous heat generation inhibitor for coal in a process (for example, a coal-fired power generation process) other than the pig iron making process in the steel industry, the petroleum-based additive is added in a stage before a process in which coal is used as a fuel. For example, the petroleum-based additive may be added in at least any stage of a process after the ship loading process and before the coal storage process, a process in a case where coal is stored in a yard, a process of carrying coal to a coal storage tank from a yard, a process in a case where coal is stored in a coal storage tank or the like, and a coal blending process, and it is preferable that the petroleum-based additive is added on the upstream side. More specifically, coal may be stored after a spontaneous heat generation inhibitor is mixed with coal that is not yet stored in a yard or a coal storage layer, or a spontaneous heat generation inhibitor may be added to the coal stored (in a storage state).

The spontaneous heat generation properties of the solid carbon resources are due to the fact that a wide variety of highly reactive radicals abundant in solid carbon resources drive oxidation reactions. The petroleum-based additive (at least one or more of petroleum heavy oil, petroleum pitch, and petroleum tar) contains a structure having hydrogen donating performance such as a naphthene ring. Accordingly, it is considered that the hydrogen donating performance chemically interacts with the solid carbon resources (traps radicals) to promote the oxidation inhibition reaction of the solid carbon resources and to exhibit an action of inhibiting the spontaneous heat generation in the solid carbon resources. It was known that an aromatic compound having a hydrogen-donating naphthene ring promotes the softening and melting properties of coal, but an effect of inhibiting the spontaneous heat generation properties of solid carbon resources was not known.

An example of an embodiment of the present invention will be described below in detail.

### <First Embodiment>

In the present embodiment, a petroleum-based additive is added to perform treatment for inhibiting the heat generation in solid carbon resources. Here, it is preferable to pre-treat the solid carbon resources before the petroleum-based additive is added. Further, it is preferable to pre-treat the petroleum-based additive before the petroleum-based additive is added to the solid carbon resources. Furthermore, it is preferable to perform a mixing process and a storage process after the petroleum-based additive is added. That is, in the first embodiment, it is preferable to first perform a pretreatment process for the solid carbon resources and a pretreatment process for the petroleum-based additive, then perform a petroleum-based additive adding process, then perform the mixing process, and then perform the storage process. From the viewpoint of inhibiting the spontaneous heat generation in the solid carbon resources, at least the petroleum-based additive adding process may be performed, and it is preferable to perform the storage process successively in a case where the solid carbon resources are also to be stored. However, in order to fully obtain effects of the present embodiment, it is preferable to perform each of the above-described processes.

### (Pretreatment process for solid carbon resources, pretreatment process for petroleum-based additive)

Pretreatment for the solid carbon resources is, for example, treatment for adjusting the grain size of the solid carbon resources serving as a raw material. Pretreatment for the petroleum-based additive is, for example, treatment for adjusting the grain size of the petroleum-based additive serving as a raw material. The pretreatment for the petroleum-based additive is performed as necessary. For example, the pretreatment for the petroleum-based additive can be performed in a case where the petroleum-based additive is a solid. The solid carbon resources and the petroleum-based additive can be adjusted in grain size, for example, by pulverization, classification, or the like. The pulverization can be performed using, for example, various pulverizers, such as a ball mill, a bead mill, a mortar, and a hammer mill. Further, the classification can be performed using, for example, a dry classifier, such as a classification sieve, a

### gravity classifier, an inertia classifier, or a centrifugal classifier.

In the present process, in order to allow an oxidation inhibition reaction to proceed in a short time, it is preferable to relatively reduce the grain size of the petroleum-based additive to promote the oxidation inhibition reaction. Specifically, the petroleum-based additive preferably has a grain size of less than 5 mm, and more preferably has a grain size of less than 2 mm. Further, in mixing the petroleum-based additive with the solid carbon resources, the petroleum-based additive cannot be mixed well in a case where the petroleum-based additive is too fine. Therefore, it is preferable that the petroleum-based additive has a grain size of 1 mm or more. The grain size is determined using a sieve. Sieve-under grains that pass through a sieve having a sieve size of X mm are defined as grains having a grain size of less than X mm, and sieve-over grains that do not pass through a sieve having a sieve size of X mm are defined as grains having a grain size of X mm or more.

The pretreatment for the solid carbon resources is performed as necessary. For example, in a case where the petroleum-based additive is sprayed on the solid carbon resources in the mixing process to be described later, the pretreatment for the solid carbon resources does not necessarily need to be performed. In a case where the solid carbon resources and the petroleum-based additive are mixed using a container, a mixer, or the like, in order to more uniformly mix the solid carbon resources and the petroleum-based additive, the pretreatment for the solid carbon resources is performed so that an average grain size of the solid carbon resources is preferably set to 0.5 times or more and 1.5 times or less an average grain size of the petroleum-based additive and more preferably set to substantially the same as the average grain size of the petroleum-based additive (0.8 times or more and 1.2 times or less). That is, the average grain size of the solid carbon resources is preferably set to 0.5 times or more the average grain size of the petroleum-based additive, and is more preferably set to 0.8 times or more the average grain size of the petroleum-based additive. In addition, the average grain size of the solid carbon resources is preferably set to 1.5 times or less the average grain size of the petroleum-based additive, and is more preferably set to 1.2 times or less the average grain size of the petroleum-based additive. Here, the average grain size is an arithmetic average grain size calculated by measuring a sample mass wi of each grain size division i using a predetermined sieve having a different sieve size (opening dimension) and by weighting a representative value of each grain size division with a mass fraction of each grain size division.

### (Petroleum-based additive adding process)

The petroleum-based additive adding process is a process of adding the petroleum-based additive to the solid carbon resources as a spontaneous heat generation inhibitor. It is preferable that the petroleum-based additive adding process is a process of adding the petroleum-based additive to the solid carbon resources as a spontaneous heat generation inhibitor at a temperature of 20°C or more to 80°C or less.

In a case where the pretreated petroleum-based additive is added to the pretreated solid carbon resources, the amount of the petroleum-based additive added to the solid carbon resources is 0.1 mass% or more, preferably 1.0 mass% or more, and more preferably 5.0 mass% or more.

In a case where the amount of the petroleum-based additive is too small, an effect of inhibiting the spontaneous heat generation in the solid carbon resources cannot be obtained. An upper limit of the amount of the petroleum-based additive added is not limited. However, from the viewpoint of cost, the upper limit of the amount of the petroleum-based additive added to the solid carbon resources is preferably 40 mass% or less, more preferably 30 mass% or less, and still more preferably 20 mass% or less. For the addition of the petroleum-based additive, the solid carbon resources and the petroleum-based additive are charged into, for example, a mixer. The temperature at which the petroleum-based additive is added to the solid carbon resources is preferably 80°C or less, more preferably 60°C or less, and still more preferably 40°C or less. The lower limit of the temperature does not need to be set, but is preferably 10°C or more and more preferably 20°C or more from actual operation conditions.

### (Mixing process)

The mixing process is a process of mixing the solid carbon resources and the petroleum-based additive. The mixing process is a process that is performed after the petroleum-based additive is added to the solid carbon resources. In the mixing process, the petroleum-based additive is well mixed to be uniformly distributed in the solid carbon resources. In a case where the amount of the solid carbon resources is small, both (the solid carbon resources and the petroleum-based additive) are put into one container, sealed, and mixed by shaking. In a case where the amount of the solid carbon resources is large, both the solid carbon resources and the petroleum-based additive are charged into a mixer or the like and mixed by shaking or rotating. In a case where a larger amount of the solid carbon resources is handled, the petroleum-based additive may be sprayed on the solid carbon resources (for example, the solid carbon resources during stacking work on a yard or the solid carbon resources stored in a yard) in addition to using the mixer or the like. The adding process and the mixing process described above can be performed at once by the spraying of the petroleum-based additive on the solid carbon resources. Further, after the spraying, mixing treatment may be further performed using a heavy machine or the like.

### (Storage process)

The storage process is a process of storing the solid carbon resources to which the petroleum-based additive is added. Since the spontaneous heat generation properties of the solid carbon resources to which the petroleum-based additive is added (hereinafter, also referred to as the solid carbon resources having been subjected to the addition) are inhibited, the solid carbon resources to which the petroleum-based additive is added can be stored in a yard, a storage tank, or the like for a predetermined period of time. The petroleum-based additive is petroleum heavy oil or a by-product obtained in the refining of petroleum, and has a structure similar to that of fossil fuels. Therefore, the solid carbon resources in which the heat generation is inhibited (for example, coal or the like) can be used as fuel for a power generation device or as a raw material for the manufacture of coke as they are.

The present invention provides an inhibition method of spontaneous heat generation in solid carbon resources, which includes a process of adding a petroleum-based additive to solid carbon resources, and a storage method for solid carbon resources using the same. According to the present invention, since the petroleum-based additive is petroleum heavy oil or a by-product obtained in the refining of petroleum, the petroleum-based additive can be obtained at a low price. Therefore, the petroleum-based additive can be added to the solid carbon resources to obtain an effect of inhibiting spontaneous heat generation properties, which can be easily performed.

### <Second Embodiment>

The present embodiment further includes the heating process between the mixing process (the petroleum-based additive adding process in a case where the mixing process is omitted) and the storage process of the first embodiment. In the first embodiment described above, the petroleum-based additive is added, so that the solid carbon resources are in a state in which spontaneous heat generation properties are reduced. The present inventors found that the spontaneous heat generation properties of the solid carbon resources can be further inhibited in a case where the solid carbon resources are further heated in an inert gas atmosphere after the petroleum-based additive is added. The reason why the solid carbon resources are further heated in the inert gas atmosphere is that there is a possibility that the solid carbon resources may be burned in a case where the solid carbon resources are heated in the air. That is, in the second embodiment, it is preferable to first perform a pretreatment process for the solid carbon resources and a pretreatment process for the petroleum-based additive, then perform a petroleum-based additive adding process, then perform a mixing process, then perform a heating process, and then perform a storage process. From the viewpoint of inhibiting the spontaneous heat generation in the solid carbon resources, at least the petroleum-based additive adding process may be performed, and it is preferable to perform the storage process successively in a case where the solid carbon resources are also to be stored. From the viewpoint of further inhibiting the spontaneous heat generation in the solid carbon resources, it is preferable to perform the heating process. However, in order to fully obtain effects of the present embodiment, it is preferable to perform each of the above-described processes. Since processes other than the heating process are the same as the processes of the first embodiment, the description thereof will be omitted and the heating process will be described in detail below.

### (Heating process)

The heating process is a process of heating the solid carbon resources to which the petroleum-based additive is added in an inert gas atmosphere. That is, in the heating process, the solid carbon resources having been subjected to the addition are charged into a heating furnace filled with inert gas and are heated using the heating furnace. The solid carbon resources having been subjected to the addition are in an inactive state by the heat treatment, so that spontaneous heat generation properties are further reduced. Since chemicals or the like do not need to be used in this heating process, cost can be reduced. Further, since inert gas such as nitrogen gas has high supply stability and is simple to use, treatment can be performed simply. Since a heating process of heating the solid carbon resources to which the petroleum-based additive is added in an inert gas atmosphere is added to the first embodiment as described above, the spontaneous heat generation properties of the solid carbon resources are further reduced. Therefore, an inhibition method of spontaneous heat generation in solid carbon resources, which is relatively inexpensive and simple, and a storage method for solid carbon resources using the same can be performed.

A heat treatment temperature of the solid carbon resources having been subjected to the addition is preferably 20°C or more, more preferably 40°C or more, still more preferably 60°C or more, even more preferably 80°C or more, much more preferably 120°C or more, and still more preferably 200°C or more. However, in a case where the heat treatment temperature is higher than a dry distillation temperature during the manufacture of the solid carbon resources, the carbonization of the solid carbon resources having been subjected to the addition is promoted. For this reason, there is a concern that the structure of the solid carbon resources may change. Therefore, it is preferable that the dry distillation temperature in a case where coke is manufactured from the solid carbon resources having been subjected to the addition is set to an upper limit. The dry distillation temperature is, for example, 600°C to 1,000°C. Accordingly, the heat treatment temperature is preferably 1,000°C or less, more preferably 800°C or less, and still more preferably 600°C or less.

A heat treatment time may be set to 1 hour or more in consideration of the fact that an oxidation inhibition reaction is sufficiently performed. An upper limit of the heat treatment time is not limited, but can be set to, for example, 1 hour or more and 168 hours or less, preferably 1 hour or more and 168 hours or less, more preferably 1 hour or more and 72 hours or less, and still more preferably 12 hours or more and 72 hours or less. That is, the heat treatment time is preferably 1 hour or more, and more preferably 12 hours or more. Further, the heat treatment time is preferably 168 hours or less, and more preferably 72 hours or less.

An atmosphere during the heat treatment is set to an inert gas atmosphere from the viewpoint of preventing the solid carbon resources having been subjected to the addition from being burned. Nitrogen gas, argon gas, or the like can be used as the inert gas in this case.

In a case where the solid carbon resources to which the petroleum-based additive is added are subjected to heat treatment in an inert gas atmosphere, a change in the structure of the solid carbon resources is caused by the heat treatment and the solid carbon resources are in an inactive state, so that the spontaneous heat generation properties are more inhibited. For this reason, it is possible to prevent fire caused by spontaneous ignition even though the solid carbon resources to which the petroleum-based additive is added are stored in a yard, a storage tank, or the like as they are after the heat treatment.

### [Examples]

The inhibition method of spontaneous heat generation in solid carbon resources according to the present invention will be specifically described below with indicating examples. The examples to be described below are merely examples of the inhibition method of heat generation in solid carbon resources, and the present invention is not limited to the examples.

### (Example 1)

Biomass charcoal of which heat generation properties were high and which was derived from acacia (acacia wood portion) was used as the solid carbon resources. Each of four tests (Test Nos. 1 to 4) shown in Table 1 to be described below was evaluated using a spontaneous heat generation-evaluating device. The carbonization temperature of the biomass charcoal used in the test is unknown. However, since the temperature of a substance at a kiln outlet is 595°C, the biomass charcoal is heated to at least 595°C or more. Petroleum pitch was used as the petroleum-based additive. This petroleum pitch is obtained in a case where a vacuum distillation residue of petroleum, which is a raw material, is thermally decomposed by heated steam having a temperature of 600°C or more. Each of these solid carbon resources and the petroleum-based additive to be added was pulverized in a grinding bowl using a metal rod, was classified using two sieves having a sieve size of 1.0 mm and a sieve size of 1.7 mm, and each of these solid carbon resources and the petroleum-based additive having a grain size range of 1.0 mm or more and less than 1.7 mm (sieve-over grains having a sieve size of 1.0 mm and sieve-under grains having a sieve size of 1.7 mm) was used. Each of 0 g, 0.05 g, 0.10 g, and 0.20 g of the petroleum-based additive was added to 1 g of the classified biomass charcoal at a temperature of 20°C, and the petroleum-based additive and the classified biomass charcoal were mixed in a sealed container by shaking (Test Nos. 1 to 4).

**[Table 1]**

| Test No. | Amount of petroleum-based additive added (mass%) | T200 (min.) | |
|---|---|---|---|
| 1 | 0 | 144 | Comparative Example 1 |
| 2 | 5 | 147 | Invention Example 1 |
| 3 | 10 | 167 | Invention Example 2 |
| 4 | 20 | 180 | Invention Example 3 |

A sample container built in a spontaneous heat generation-evaluating device (spontaneous ignition tester manufactured by Shimadzu Corporation, SIT-2) is filled with each mixed sample, and spontaneous ignition properties of each of the samples of Test Nos. 1 to 4 were measured by the spontaneous heat generation-evaluating device. After an atmosphere in the device was replaced with a nitrogen atmosphere, a sample temperature was increased by external heating until reaching 130°C. After it was confirmed that the sample temperature had reached 130°C, the atmosphere in the device was switched from nitrogen to air and the external heating was turned off. This point in time was set as a test start time, and a temperature-time behavior due to the spontaneous heat generation in the sample was confirmed. Specifically, the sample temperature was measured every 5 seconds to obtain a temperature-time (vertical axis-horizontal axis) temperature rising curve.

Here, since the petroleum-based additive has a large heat capacity, it is considered that a temperature rising rate is delayed as the petroleum-based additive is added. Accordingly, it is not possible to distinguish whether a factor causing a delay in a temperature rising rate of the temperature rising curve obtained from the spontaneous heat generation-evaluating device is due to the heat capacity of the petroleum-based additive or an interaction between the petroleum-based additive and the solid carbon resources. Therefore, a temperature rising curve obtained on the assumption that the petroleum-based additive and the solid carbon resources had the same temperature rising rate was corrected to eliminate the influence of a delay in the temperature rising rate due to the heat capacity of the petroleum-based additive. Specifically, the temperature rising rate (dT/dt) is calculated from the differentiation of the temperature rising curve obtained by measurement. The temperature rising rate is divided by the mass of (solid carbon resources + petroleum-based additive) to obtain the temperature rising rate of a mixture of the solid carbon resources (biomass charcoal) and the petroleum-based additive per unit mass. For example, in a case where 20 mass% of the petroleum-based additive is added, the temperature rising rate (dT/dt) is divided by 1.2. The temperature rising rate of the solid carbon resources per unit mass is integrated to return to a temperature-time curve (hereinafter, also referred to as a corrected temperature rising curve). The spontaneous heat generation properties of each sample were evaluated based on a time taken until a sample temperature indicated by the corrected temperature rising curve reached 200°C from 130°C (hereinafter, this time will also be referred to as T200). As the value of T200 is larger, the spontaneous heat generation properties are more inhibited.

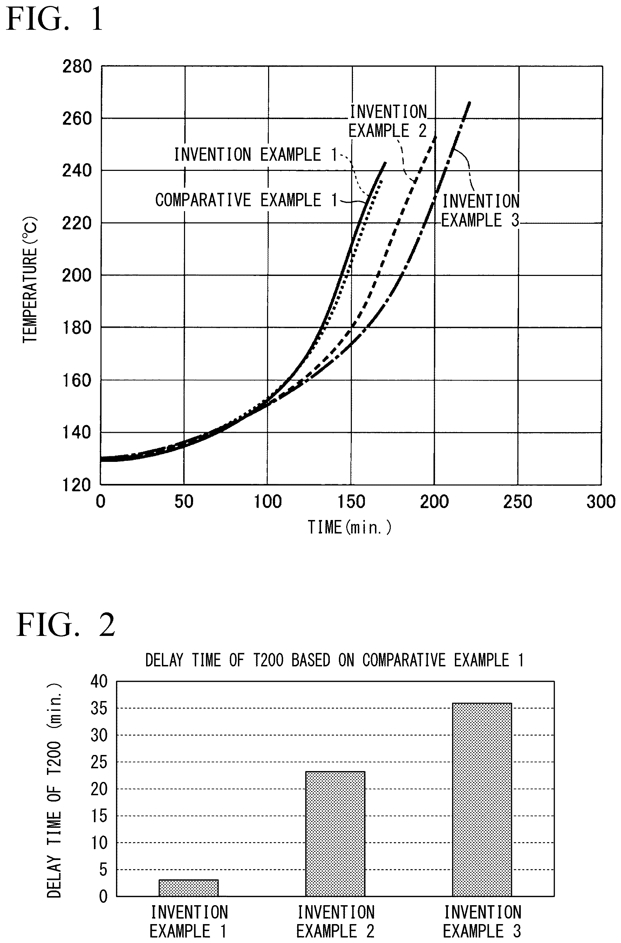

FIG. 1 is a graph showing corrected temperature rising curves of Test Nos. 1 to 4 (Comparative Example 1 and Invention Examples 1 to 3). FIG. 2 is a graph in which values of T200 calculated from the corrected temperature rising curves (FIG. 1) are compared with each other. More specifically, FIG. 2 is a graph showing the delay time of T200 of each Invention Example based on T200 of Comparative Example 1 as a reference (T200 of Invention Example - T200 of Comparative Example 1). Table 1 shows T200.

As shown in FIG. 2, it can be seen from the value of T200 that the spontaneous heat generation properties of all test Nos. 2 to 4 (Invention Examples 1 to 3) are lower than the spontaneous heat generation properties of test No. 1 (Comparative Example 1) to which the petroleum-based additive is not added. Since the sample is heated to 130°C in advance in the present test, the subsequent temperature rising rate is increased (that is, an acceleration test is performed). For this reason, for example, a difference between T200 of Invention Example 1 and T200 of Comparative Example 1 is 3 minutes, but it is considered that T200 of Invention Example 1 is longer than T200 of Comparative Example 1 by 3 minutes or more in an actual storage site (that is, in an environment where the acceleration test is not performed). Therefore, Invention Example 1 sufficiently exhibits the effect of inhibiting the spontaneous heat generation properties.

### (Example 2)

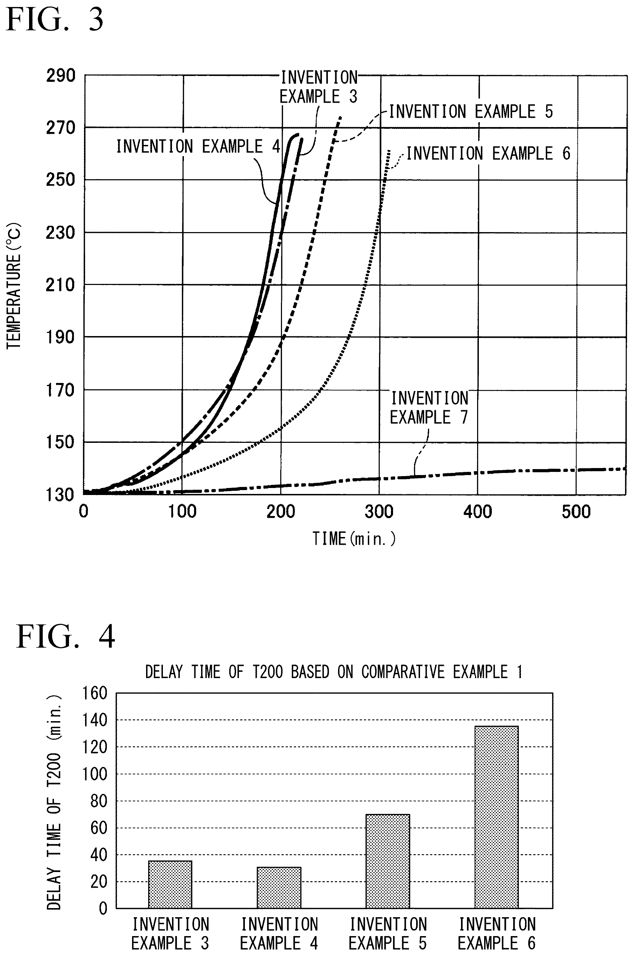

Each of the same solid carbon resources (biomass charcoal derived from acacia (acacia wood portion)) and the same petroleum-based additive (petroleum pitch) as those in Example 1 was pulverized and classified to have a grain size in a range of 1.0 mm or more and less than 1.7 mm. 0.2 g or 0.05 g of the petroleum-based additive was added to and mixed with 1 g of the solid carbon resources (biomass charcoal) at a temperature of 20°C. After that, each sample was heated in a nitrogen atmosphere for 12 hours at a temperature shown in Table 2 described later. After each sample was air-cooled to reach a room temperature (20°C), the temperature rising curve of each sample having been subjected to this treatment was measured using the spontaneous ignition-evaluating device (SIT-2) as in Example 1, and was corrected in the same manner as in Example 1. FIG. 3 is a graph showing corrected temperature rising curves of Test No. 4 of Example 1 (Invention Example 3) and Test Nos. 5 to 8 of Example 2 (Invention Examples 4 to 7). Further, FIG. 4 is a graph in which values of T200 calculated from the corrected temperature rising curves of Test No. 4 of Example 1 (Invention Example 3) and Test Nos. 5 to 7 of Example 2 (Invention Examples 4 to 6) are compared with each other. More specifically, FIG. 2 is a graph showing the delay time of T200 of each Invention Example based on T200 of Comparative Example 1 as a reference (T200 of Invention Example - T200 of Comparative Example 1). Table 2 shows T200 (Table 1 shows T200 of Invention Example 3).

**[Table 2]**

| Test No. | Amount of petroleum-based additive added (mass%) | Heat treatment temperature (°C) | T200 (min.) | |
|---|---|---|---|---|
| 5 | 20 | 60 | 175 | Invention Example 4 |
| 6 | 20 | 80 | 213 | Invention Example 5 |
| 7 | 20 | 120 | 278 | Invention Example 6 |
| 8 | 20 | 200 | - | Invention Example 7 |
| 9 | 5 | 120 | 380 | Invention Example 8 |

From the obtained temperature rising curves, it was found that the spontaneous heat generation properties were significantly reduced since a slope of the corrected temperature rising curve is gentler as the heat treatment temperature is higher, and particularly, the slope was significantly gentle at a heat treatment temperature of 80°C or more (Invention Examples 5 to 7). Further, since the spontaneous heat generation properties were reduced as shown in FIG. 3 in Invention Example 7 (a heat treatment temperature of 200°C), T200 could not be calculated. From these facts, it is considered that an effect of inhibiting the spontaneous heat generation properties is improved since a chemical interaction between the petroleum-based additive and the solid carbon resources is more promoted as the heat treatment temperature is higher.

Furthermore, in a case where Invention Example 8 of Example 2 and Invention Example 3 of Example 1 are compared with each other, Invention Example 8 subjected to the heat treatment has a larger value of T200 than test Invention Example 3 having a large amount of the petroleum-based additive added thereto without being subjected to the heat treatment, despite the smaller amount of the petroleum-based additive added thereto, and the spontaneous heat generation properties of Invention Example 8 are thus inhibited. From the above, it can be said that an effect of inhibiting the spontaneous heat generation properties can be obtained even though the amount of the petroleum-based additive added is reduced in a case where the heat treatment process is added. In a case where Invention Example 3 and Invention Example 4 are compared with each other, T170 (a time taken until a sample temperature reaches 170°C from 130°C) of Invention Example 4 is longer than T170 of Invention Example 3. Therefore, the heat treatment process of Invention Example 4 sufficiently exhibits the effect of inhibiting the spontaneous heat generation properties.

The preferred embodiments of the present invention have been described in detail above with reference to the accompanying drawings, but the present invention is not limited to the embodiments. Since it is clear that various modification examples or alteration examples can be thought up by those skilled in the art to which the invention pertains without departing from the technical scope described in claims, it is naturally understood that these examples are also included in the technical scope of the present invention.

## Claims

1. An inhibition method of spontaneous heat generation in solid carbon resources, the method comprising:
adding a petroleum-based additive to solid carbon resources as a spontaneous heat generation inhibitor.

2. The inhibition method of spontaneous heat generation in solid carbon resources according to claim 1,
wherein the petroleum-based additive is added to the solid carbon resources in an amount of 1 mass% or more.

3. The inhibition method of spontaneous heat generation in solid carbon resources according to claim 1, further comprising:
performing heat treatment on the solid carbon resources to which the petroleum-based additive is added in an inert gas atmosphere at a temperature of 20°C or more for 1 hour or more.

4. A storage method for solid carbon resources for storing solid carbon resources treated by the method according to any one of claims 1 to 3.
